(19) Europäisches Patentamt
European Patent Office
Office européen des brevets

(11) Publication number: 0 555 903 A1

# (12) EUROPEAN PATENT APPLICATION

(21) Application number: **93200216.5**

(22) Date of filing: **28.01.93**

(51) Int. Cl.5: **C08F 283/01**, C08G 63/48, C09D 5/02, C09D 151/08

(30) Priority: **04.02.92 NL 9200197**

(43) Date of publication of application: **18.08.93 Bulletin 93/33**

(84) Designated Contracting States: **AT BE CH DE DK ES FR GB GR IE IT LI LU MC NL PT SE**

(71) Applicant: **AKZO N.V.**
**Velperweg 76**
**NL-6824 BM Arnhem(NL)**

(72) Inventor: **Buter, Roelof**
**Surinkhof 1**
**NL-6952 HT Dieren(NL)**
Inventor: **Postma, Peter Martin**
**Reitdiepskade 18a**
**NL-9974 PJ Zoutkamp(NL)**

(74) Representative: **Schalkwijk, Pieter Cornelis et al**
**AKZO N.V., Patent Department (Dept. APTA),**
**P.O. Box 9300**
**NL-6800 SB Arnhem (NL)**

## (54) Water-dispersible hybrid core-shell polymer, an aqueous dispersion thereof, and a coating composition made therefrom.

(57) The invention relates to a water-dispersible hybrid polymer comprising an unsaturated fatty acid-functionalised polyester at least 40 mole% of which contains conjugated double bonds, which polyester has an acid number of less than 5 (mg KOH/g) and is built up of cycloaliphatic and/or aromatic dicarboxylic acids and aliphatic dicarboxylic acids in a molar ratio of 5:1 to 40:1, onto which polyester an addition polymer chain (shell) having an acid number in the range of 20 to 100 (mg KOH/g) has been grafted.

Aqueous dispersions of said hybrid polymers are suitable for use in aqueous coating compositions with a high solids content. Films produced by using such coating compositions have good physical and mechanical properties and prove chemical - and water-resistant as well. A process for coating a substrate with such composition is also provided.

EP 0 555 903 A1

The invention relates to a water-dispersible hybrid polymer comprising an unsaturated fatty acid-functionalised polymer (core), at least a portion of the unsaturated fatty acids of which contains conjugated double bonds, onto which an addition polymer chain (shell) has been grafted. Such a water-dispersible hybrid polymer is known from US-A-4 166 054, which describes an epoxy resin ester of a partially conjugated unsaturated fatty acid (core) onto which an addition polymer chain has been grafted. Aqueous dispersions of said hybrid polymers are said to be suitable for use in aqueous coating compositions.

A drawback to the known hybrid polymers is their susceptibility to ultraviolet radiation. As a result thereof, coating compositions based on these hybrid esters of epoxy resins will become discoloured and brittle under the influence of sunlight. For that reason said coating compositions are less suitable for use as topcoats. The invention has for its object to provide a water-dispersible hybrid polymer which can be used not only in fillers and primers, but also in topcoats.

To this end, the invention consists of a water-dispersible hybrid polymer of the above-mentioned type, of which the unsaturated fatty acid-functionalised polyester:

- has an acid number of less than 5 (mg KOH/g),
- is built up of polyols and a) cycloaliphatic and/or aromatic dicarboxylic acids or derivatives thereof and b) aliphatic dicarboxylic acids having 4-40 carbon atoms or derivatives thereof, with the molar ratio of a:b being in the range of 5:1 to 40:1,
- comprises an unsaturated fatty acid at least 40 mole% of which contains conjugated double bonds, and

of which the addition polymer chain (shell) has an acid number in the range of 20 to 100 (mg KOH/g).

Such a hybrid polymer does not contain any compounds which are sensitive to ultraviolet rays, such as aromatic epoxy compounds. It was found that the hybrid polymers according to the invention, when dispersed in an aqueous medium, give a stable dispersion of comparatively low viscosity, even for concentrations of 40 wt.% and higher. The hybrid polymers themselves have a relatively low acid number comparable with that of polymers used in organic solvents. Aqueous dispersions of these hybrid polymers are suitable for use in aqueous coating compositions with a high solids content. Films produced by using such coating compositions have good physical and mechanical properties and proved to be chemical- and water-resistant as well.

It is of importance for the unsaturated fatty acid functionalised polyester to have a low acid number (less than 5) and for the addition polymer chain to have a high acid number (from 20 to 100) since otherwise no hybrid polymer with a core-shell structure will be formed. It is because of the core-shell structure that a stable dispersion is formed upon dispersion in an aqueous medium. Further, it is of importance for the polyester to comprise aromatic and/or cycloaliphatic dicarboxylic acids and aliphatic dicarboxylic acids having 4-40 carbon atoms in a molar ratio (5:1 to 40:1) providing the optimum balance between flexibility and hardness. It is also of importance for the unsaturated fatty acid component to comprise at least 40 mole% of fatty acid having conjugated double bonds. If this is not the case, grafting the addition polymer chain will cause problems.

For completeness' sake reference is made to DE-OS-2 349 154, which describes a mercapto-functionalised alkyd resin onto which an addition polymer chain has been grafted. However, this resin is not water-dispersible but is employed in the powdered form or as a solution in aromatic hydrocarbons.

The hybrid polymer according to the invention preferably comprises, calculated on its overall weight, 40-90 wt.% of core material and 10-60 wt.% of shell material. It was found that within these limits the individual components' advantageous properties were optimally combined within the hybrid polymer. As advantageous polyester properties may be mentioned good mechanical resistance and a proper balance between hardness and flexibility. It is to the addition polymers that the hybrid polymer owes its good chemical resistance.

In general, the core should comprise 5-40 wt.% of unsaturated fatty acid. Such quantities make it possible to apply enough addition polymer to the core to produce a water-dispersible hybrid polymer. Also, it is recommended to make use of a core composed of a polyester having a molecular weight (Mn) of 500 to 4000. Of course, said molecular weight in its turn is of importance with respect to the dispersibility of the hybrid polymer.

Hybrid polymers having a low acid number may be obtained by reacting an unsaturated fatty acid-functionalised polyester having an acid number in the range of 5 to 20 with a glycidyl ester of a carboxylic acid or some other mono-epoxide.

The core

Especially suitable hybrid polymers are those of which the core is a polyester built up of:

(a) n moles of an aromatic and/or a cycloaliphatic dicarboxylic acid or a derivative thereof,

(b) m moles of an aliphatic dicarboxylic acid having 4-40 carbon atoms or a derivative thereof,

(c) x moles of a diol having 2-12 carbon atoms,

(d) y moles of a triol having 3-12 carbon atoms,

(e) y moles of an unsaturated fatty acid at least 40 mole% of which contains conjugated double bonds,

wherein n = 1 to 10, n/m is in the range of 5/1 to 40/1, preferably 10/1 to 30/1, and x + y = n + m + 1, and

(f) 2-10 wt.% (calculated on the weight of a + b + c + d + e) of the glycidyl ester of a carboxylic acid according to formula 1:

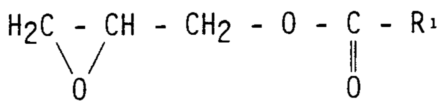

(1)

wherein $R^1$ is an alkyl group having 4-40 carbon atoms.

By derivatives of cycloaliphatic or aromatic dicarboxylic acids are meant here: the anhydrides or alkyl esters having alkyl groups of 1-4 carbon atoms. As suitable cycloaliphatic or aromatic dicarboxylic acids or derivatives thereof (component a) may be mentioned: tetrahydrophthalic acid, tetrahydrophthalic anhydride, endomethylene tetrahydrophthalic acid, hexachloroendomethylene tetrahydrophthalic acid, hexahydrophthalic acid, hexahydrophthalic acid, hexahydroterephthalic acid, phthalic acid, p-carboxymethyl benzene acid, dichlorophthalic acid, tetrachlorophthalic acid, dimethyl terephthalate, dimethyl hexahydroterephthalate, naphthalene-2,6-dicarboxylic acid, and biphenyl-o,o'-dicarboxylic acid. Notably preferred are dicarboxylic acids having 8-10 carbon atoms, e.g., isophthalic acid and terephthalic acid. When such hybrid polymers are used in topcoats, preference is given to cycloaliphatic dicarboxylic acids since this will benefit ultraviolet resistance.

By derivatives of aliphatic dicarboxylic acids are meant here: the alkyl esters having alkyl groups of 1-4 carbon atoms. Examples of aliphatic dicarboxylic acids having 4-40 carbon atoms (component b) include: adipic acid, succinic acid, sebacic acid, dodecanoic acid, azelaic acid, dimerised fatty acids, and hydrogenated dimerised fatty acids. Of these, dicarboxylic acids having 10-40 carbon atoms are preferred, notably dimerised fatty acids having 18-36 carbon atoms. When such hybrid polymers are used in topcoats, preference is given to saturated aliphatic dicarboxylic acids.

As examples of diols (component c) may be mentioned linear and branched diols having 2-12 carbon atoms, such as glycol, 1,3-propane diol, 1,6-hexane diol, 1,12-dodecane diol and, preferably, substituted 1,3-propane diols. These include 1,3-propane diols with an alkyl group with 1-4 carbon atoms, an aryl group such as a phenyl group, or a cycloaliphatic group such as a cyclohexyl group at the 2 position. Suitable diols in that case will be: propane-1,3-diol, 2,2-dimethylpropane-1,3-diol, 2-methyl-2-cyclohexylpropane-1,3-diol, 2-methyl-2-toluyl-propane-1,3-diol, 2-methyl-2-phenyl-propane-1,3-diol, 2-propyl-2-n-butylpropane-1,3-diol, 2-methyl-2-p-isopropylphenyl-propane-1,3-diol. Particularly preferred are propane-1,3-diols with at least one alkyl group having 1-4 carbon atoms at the 2 position, notably 2,2-dimethyl-propane-1,3-diol.

Examples of suitable triols (component d) include: glycerol, 1,1,1-trimethylol ethane, 1,1,1-trimethylol propane.

As examples of suitable unsaturated fatty acids may be mentioned a wide range of mono- and poly-unsaturated fatty acids, with those having 12-26 carbon atoms being preferred. Specific examples include mono-unsaturated fatty acids, such as myristoleic acid, palmitoleic acid, oleic acid, gadoleic acid, erucic acid, ricinolinic acid, bi-unsaturated fatty acids such as linoleic acid; tri-unsaturated fatty acids such as linolenic acid, eleostearic acid, and licanic acid; quadri-unsaturated fatty acids such as arachidic acid and clupanodonic acid; and other unsaturated fatty acids obtained from animal or vegetable oils. Generally speaking, use is made of natural fatty acids comprising at least 80 wt.% of the above-mentioned fatty acids or mixtures thereof.

The unsaturated fatty acid component should comprise at least 40 mole% of fatty acid with conjugated double bonds, e.g. conjugated linoleic acid. The amount of conjugated double bonds-containing fatty acid desired, however, is dependent on the monomers and initiators employed in grafting the addition polymer chains onto the core.

Low acid numbers (lower than 2 mg KOH/g) and a narrow molecular weight distribution (an Mw/Mn dispersity of below 2,5) may be obtained by reacting the polyester, which has an acid number in the range of 5 to 20, with a mono-epoxide such as 1,2-epoxyoctane or, preferably, with a glycidyl ester of a carboxylic acid according to formula 1:

```
H2C - CH - CH2 - O - C - R1
   \ /               ||          (1)
    O                O
```

wherein $R^1$ represents an alkyl group having 4-40 carbon atoms.

The polyester (core) may be prepared from the individual components, but will preferably be prepared from intermediates such as ester diols or polyester diols. The polyester is prepared from, e.g.:

1a) an ester diol obtained by reacting an aromatic and/or cycloaliphatic dicarboxylic acid or anhydride with a diol (molar ratio 1:2), and/or

1b) an ester diol obtained by reacting an aliphatic dicarboxylic acid or anhydride with a diol (molar ratio 1:2), and/or

1c) an ester diol obtained by reacting a fatty acid with a triol (molar ratio 1:1), and

2) a dicarboxylic acid or anhydride.

It is clear from the above that the polyesters which are utilisable according to the invention may be prepared in any conceivable way. In general, one or more diols are reacted with one or more carboxylic acids or, if so desired, with an anhydride and/or an alkyl ester thereof. Next, this mixture is reacted with a fatty acid and a triol or with a fatty acid ester. Alternatively, the fatty acid component may be incorporated into the polyester by transesterification of an oil.

Esterification is carried out at elevated temperature, say 115° to 250°C, optionally in the presence of one or more organic solvents such as toluene or xylene. As a rule, the reaction is carried out in the presence of conventional amounts of esterification catalyst. To this end use may be made of any common catalyst, e.g. an acid catalyst such as p-toluene sulphonic acid, a basic compound such as an amine, or compounds such as zinc oxide, tetra-isopropylorthotitanate, and triphenylbenzylphosphonium chloride.

For the reaction between the epoxide groups (component f) and the carboxyl groups use may be made of a known catalyst, e.g. Cr(III)2-ethylhexanoate, zinc chloride, and zinc acetylacetonate.

## The shell

The hybrid polymer is obtained by the addition polymerisation of radically polymerisable monomers onto the unsaturated fatty acid-functionalised polyester described hereinbefore. In this process the addition polymer chains are grafted onto the polyester main chain via the unsaturated fatty acid's unsaturated bond.

The monomers polymerisable under the influence of radicals for the addition polymer chains may be chosen from a wide range, including ethylenically unsaturated monocarboxylic acids such as (meth)acrylic acid and crotonic acid; (cyclo)alkyl(meth)acrylates having 1-12 carbon atoms in the (cyclo)alkyl group such as methyl(meth)acrylate, ethyl(meth)acrylate, propyl(meth)acrylate, isopropyl(meth)acrylate, butyl(meth)-acrylate, 2-ethyl(meth)acrylate, octyl(meth)acrylate, isobornyl(meth)acrylate, dodecyl(meth)acrylate, and cyclohexyl(meth)acrylate; dicarboxylic acids such as maleic acid (and anhydride), fumaric acid, itaconic acid (and anhydride); (cyclo)alkyl esters of such dicarboxylic acids having 1-12 carbon atoms in the (cyclo)alkyl group such as dimethylmaleate, diethylmaleate, diethylfumarate, dipropylmaleate, dibutylmaleate, dibutylfumarate, 2-ethylhexylmaleate, 2-ethylhexylfumarate, octylmaleate, isobornylmaleate, dodecylmaleate, and cyclohexylmaleate; (meth)acrylates having ether groups such as 2-methoxy-ethylmethacrylate, 2-ethoxyethylmethacrylate, and 3-methoxy-propylmethacrylate; hydroxyalkyl(meth)acrylates such as 2-hydroxyethyl(meth)acrylate, 2-hydroxypropyl(meth)acrylate, 4-hydroxybutylacrylate, 6-hydroxyhexylacrylate, p-hydroxycyclohexyl(meth)acrylate, hydroxypolyethylene glycol(meth)acrylates; hydroxypolypropylene glycol(meth)acrylates and alkoxy derivates thereof; monovinyl aromatic compounds such as styrene, vinyltoluene, α-methylstyrene, and vinylnaphthalene; other substituted (meth)acrylate compounds such as (meth)acrylamide, (meth)acrylonitrile, N-methylol(meth)acrylamide, and N-alkyl(meth)acrylamides; other mono-unsaturated compounds such as vinylchloride, vinylacetate, vinylpropionate, and vinylpyrrolidone.

For monomer mixtures which are pre-eminently suited to form the addition polymer chains reference is made to EP-B-0 000 601. The following monomer mixture is a specific example from said publication:

35-55 mole% of styrene and/or α-methylstyrene,

20-50 mole% of a compound according to formula 2:

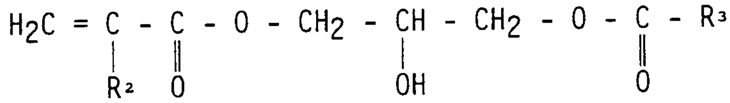

(2)

wherein:

$R^2$ represents a hydrogen atom or a methyl group and

$R^3$ represents an alkyl group having 4-40 carbon atoms, and

0-30 mole% of some other mono-unsaturated compound such as described hereinbefore.

Another specific example of a monomer mixture disclosed in EP-B-0 000 601 is as follows:

35-55 mole% of styrene and/or $\alpha$-methylstyrene,

20-50 mole% of acrylic acid and/or methacrylic acid, and

0-30 mole% of some other mono-unsaturated compound such as described hereinbefore,

wherein, during or after polymerisation, the reaction product is reacted with a glycidyl ester of a carboxylic acid according to formula 3:

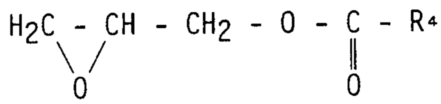

(3)

wherein $R^4$ is an alkyl group having 4-40 carbon atoms.

As stated above, the specific monomers and monomer mixtures should be so selected as to ensure that the resulting addition polymer chain has an acid number in the range of 20 to 100 (mg KOH/g). With an acid number of the addition polymer chain is less than 20, it was found to be no longer possible to obtain a stable dispersion of the hybrid polymer, while an acid number of more than 100 was found to result in a dispersion with unacceptable water resistance.

Of course, the selection of the monomers and/or monomer mixtures is dependent on various factors, including the final application of the hybrid polymer. In actual practice, it is quite easy for the skilled man to take these and other factors into account and adjust the monomers selection in line with the envisaged use.

The copolymerisation of the ethylenically unsaturated monomers in the presence of the unsaturated fatty acid-functionalised polyester is usually carried out in an inert atmosphere (e.g. of nitrogen) and in the presence of a peroxide radical initiator. The polymerisation temperature may be from 60° to 200°C, preferably from 100° to 160°C.

As suitable radical initiators may be mentioned: dibenzoyl peroxide, dicumyl peroxide, methylethylketone peroxide, cumenehydroperoxide, tert.butyloxy-2-ethylhexanoate, tert.butylperbenzoate, tert.butylcumyl peroxide, di-tert.butylperoxy-3,5,5-trimethylcyclohxane, 1,3-bis(tert.butyl)-peroxyisopropylbenzene. Alternatively, mixtures of the above-mentioned initiators may be employed. In general, the radical initiators are used in an amount of about 0,05 wt.% to about 10 wt.%, preferably 1 wt.% to 5 wt.%, calculated on the overall weight of the monomer mixture.

It is preferred to carry out the polymerisation reaction in an organic solvent (10-30 wt.%) at a temperature of 60° to 200°C. The organic solvent used in this reaction should be water-miscible. Suitable examples of such a solvent are glycol ethers and propyleneglycol ethers such as methoxypropanol, butoxyethanol, isopropanol, diethyleneglycolmonobutyl ether, diethyleneglycolmonomethyl ether, propoxypropanol, diethyleneglycoldimethyl ether, and N-methylpyrrolidone. Alternatively, use may be made of small amounts of water-immiscible organic solvent, e.g. ethylmethylketone and methylisobutylketone.

Dispersions of hybrid polymers

In addition, the invention relates to aqueous dispersions of the above-described hybrid polymers. These are easy to disperse in an aqueous medium after at least a portion of the carboxyl groups of the addition polymer chains has been neutralised. The group of suitable neutralisation agents for carboxyl groups comprises a wide range of organic and inorganic bases, e.g. tertiary amines. Preferably, the degree of neutralisation is 50 to 130% on the basis of equivalency.

After neutralisation the hybrid polymers can be dispersed easily and conventionally in an aqueous medium, preferably at elevated temperatures in the range of 50° to about 100°C. When employing hybrid polymers according to the invention in many cases stable dispersions of 40 wt.% and even higher may be obtained.

Coating compositions of dispersions of hybrid polymers

As was stated hereinbefore, dispersions of hybrid polymers are preeminently suited to be used in coating compositions. When the dispersions of hybrid polymers according to the invention are so utilised, the coating compositions may also contain a curing agent for curing via the hybrid polymer's hydroxyl groups. Films of coating compositions according to the invention were found to have excellent physical and mechanical properties such as flexibility, hardness, and gloss.

As suitable curing agents may be mentioned, generally, N-methylol- and/or N-methylol ether-containing aminoplasts. Good results are obtained when use is made of methylolmelamine containing 4-6 methylol groups per molecule, with at least three of the methylol groups being esterified with methanol , butanol and/or a methanol or butanol condensation product of formaldehyde and N,N'-ethylene diureum. Other suitable curing agents include water-dispersible blocked isocyanates, e.g. those blocked with methyl ethyl ketoxime, and isocyanate group-containing adducts of a polyisocyanate and a hydroxy-carboxylic acid, e.g. dimethylpropionic acid.

As a rule, the curing agents reacting with the hydroxyl groups are used in such an amount as will give a ratio of the number of hydroxyl groups in the hybrid polymer to the number of reactive groups of the curing agent in the range of 0,7 to 1,5.

Depending on the field of application, the coating compositions may contain a variety of other additives common to the paint industry such as pigments, colouring agents, pigment dispersing agents, and thixotropic and rheological agents. If so desired, the coating composition may also contain accelerators for the curing reaction, e.g. acid compounds such as p-toluene sulphonic acid and blocked derivatives thereof.

The coating compositions according to the invention may be applied onto any known substrate such as wood, synthetic materials, and metals. Suitable application methods include rolling, spraying, sprinkling, dipping, and electrostatic spraying. Needless to say, the coating composition may also be applied by simple brushing.

The coating composition may be dried and cured under a variety of conditions, e.g. at room temperatuur. Accelerated curing may be accomplished by baking at elevated temperatures in the range of 100° to 160°C over a period of 20 to 60 minutes.

These coating compositions are suitable for use in a wide range of applications. They are especially suitable, however, for use as primer/filler, and clear and coloured paints.

The invention will be further illustrated below with reference to a number of non-limitative examples.

Examples

In the following examples, a number of stable aqueous polymer dispersions were prepared in accordance with the invention. Various properties of these dispersions were measured, the results being listed in TABLE I.

For instance, the dispersions' mean particle size was determined by dynamic light scattering, the dispersions being diluted to a solids content of 0,1 wt.%. The viscosity of the dispersions was determined with a Brookfield viscometer (LV-4; 60 rpm). The solids content of the dispersions was determined in accordance with ASTM method 1644-59, with heating to 140°C over a period of 30 minutes.

Preparation of the dispersions

Polyesters having a molecular weight of about 2000 of theory were prepared from diol intermediates, phthalic anhydride, and a dimerised fatty acid (Pripol 1013® ex Unilever). Three diol intermediates were employed:

intermediate A:

In a 6 l flask fitted with a stirrer, a thermometer, and a distillation apparatus a mixture was homogenised which was composed of:
830 g of isophthalic acid,
740 g of phthalic acid,
2184 g of 2,2-dimethyl-1,3-propane diol, and
1,5 g of tetra-isopropyl-o-titanate.

Next, the contents of the flask were heated to 150°C, at which temperature distillation of the water began. Over a period of 5 hours the temperature was raised to 245°C. After 8 hours the reaction mixture

had an acid number of 0,2 (mg KOH/g resin). The molecular weight of intermediate A was 334 of theory.

intermediate B:

In a 2 l flask fitted with a stirrer, a thermometer, and a distillation apparatus a mixture was homogenised which was composed of:
670 g of 1,1,1-tris(hydroxymethyl)propane,
1425 g of unsaturated fatty acid (containing 65% of conjugated linoleic acid, Nouracid DE-656® ex Akzo), and
1,3 g of tetra-isopropyl-o-titanate.

Next, the contents of the flask were heated to 160°C, at which temperature distillation of the water began. Over a period of 1 hour the temperature was raised to 245°C. After 2 hours the reaction mixture had an acid number of 1,9 (mg KOH/g resin). The molecular weight of intermediate B was 401 of theory.

intermediate C:

In a 3 l flask fitted with a stirrer, a thermometer, and a distillation apparatus a mixture was homogenised which was composed of:
827,1 g of cis-hexahydrophthalic anhydride,
1172,9 g of 2,2-dimethyl-1,3-propane diol, and
0,6 g of tetra-isopropyl-o-titanate.

Next, the contents of the flask were heated to 185°C, at which temperature distillation of the water began. Over a period of 5 hours the temperature was raised to 245°C. After 8 hours the reaction mixture had an acid number of < 1 (mg KOH/g resin). The molecular weight of intermediate C was 344 of theory.

## Example 1

In a 2 l flask fitted with a stirrer, a thermometer, and a distillation apparatus a mixture was homogenised which was composed of:
545,2 g of intermediate A,
200,5 g of intermediate B,
185,0 g of phthalic anhydride, and
71,3 g of dimerised fatty acid, and
1,0 g of tetra-isopropyl-o-titanate.

Next, the contents of the flask were heated to 195°C, at which temperature distillation of the water began. Over a period of 1 hour the temperature was raised to 245°C. After 3,5 hours the reaction mixture had an acid number of 10,0 (mg KOH/g resin). The contents of the flask were cooled to 180°C, and 45,5 g of glycidyl ester of 1,1-dimethyl-1-heptanecarboxylic acid (Cadura E-10® ex Shell) were added. The reaction mixture was kept at 180°C for 1 hour. After cooling to 125°C, 125,0 g of dipropyleneglycol monomethyl ether were added to the reaction mixture. The solids content of polyester 1 was 82,4%, the acid number less than 1, Mw = 3017, Mn = 1726, and the Mw/Mn dispersity was 1,75.

339,8 g of polyester 1 were fed together with 14,9 g of dipropyleneglycol monomethyl ether and 25,3 g of 2-propanol to a 2 l flask fitted with a stirrer, a thermometer, a dropping funnel, and a reflux condenser.

The dropping funnel was filled with a homogeneous mixture of:
28,7 g of styrene,
6,9 g of methylmethacrylate,
24,8 g of acrylic acid,
56,0 g of Cadura E-10®,
3,4 g of dicumylperoxide, and
0,1 g of Cr(III)2-ethylhexanoate.

After ventilating the flask and the dropping funnel were brought under a nitrogen atmosphere. The contents of the flask were heated to reflux temperature (about 120°C). The contents of the dropping funnel were added dropwise to the flask over a period of 1 hour. The reflux temperature rose to about 130°C, and the reaction mixture was kept at this temperature for 3 hours. Next, the contents of the flask were cooled to 100°C and 10,7 g of N,N-dimethylethanolamine were added, after which, over a period of 2 hours, 510,7 g of demineralised water were also added.

Example 2

Example 1 was repeated in its entirety, except that the mixture which was homogenised in the flask was composed of:
522,0 g of intermediate A,
262,7 g of intermediate B,
193,8 g of phthalic anhydride, and
74,7 g of dimerised fatty acid, and
0,8 g of tetra-isopropyl-o-titanate.

After 4,5 hours the reaction mixture had an acid number of 8,8 (mg KOH/g resin). The contents of the flask were cooled to 180 °C, and 38,0 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 2 was 83,3 %, the acid number was less than 1, Mw = 3692, Mn = 1884, and the Mw/Mn dispersity was 1,96.

336,1 g of polyester 2 together with 4,0 g of dipropyleneglycol monomethyl ether and 29,3 g 2-propanol were fed to a 2 l flask. On conclusion of the addition polymerisation process and after cooling of the contents of the flask to 100 °C, 10 7 g of N,N-dimethylethanolamine were added, after which, over a period of 2 hours, 611,1 g of demineralised water were also added.

Example 3

Example 1 was repeated in its entirety, except that the mixture which was homogenised in the flask was composed of:
517,0 g of intermediate A,
230,6 g of intermediate B,
185,0 g of phthalic anhydride, and
71,3 g of dimerised fatty acid, and
0,8 g of tetra-isopropyl-o-titanate.

After 3,5 hours the reaction mixture had an acid number of 9,2 (mg KOH/g resin). The contents of the flask were cooled to 180 °C, and 39,7 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 3 was 82,4%, the acid number was less than 1, Mw = 3549, Mn = 1853, and the Mw/Mn dispersity was 1,92.

339,8 g of polyester 3 together with 29,3 g of 2-propanol were fed to a 2 l flask. On conclusion of the addition polymerisation process and after cooling to 100 °C, 10,7 g of N,N-dimethylethanolamine were added, after which, over a period of 2 hours, 552,6 g of demineralised water were also added.

Example 4

Example 1 was repeated in its entirety, except that the mixture which was homogenised in the flask was composed of:
525,4 g of intermediate A,
238,7 g of intermediate B,
183,8 g of phthalic anhydride, and
88,5 g of dimerised fatty acid, and
0,8 g of tetra-isopropyl-o-titanate.

After 3,5 hours the reaction mixture had an acid number of 9,9 (mg KOH/g resin). The contents of the flask were cooled to 180 °C, and 44,1 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 4 was 83,0%, the acid number was less than 1, Mw = 3837, Mn = 1902, and the Mw/Mn dispersity was 2,02.

337,3 g of polyester 4 together with 2,7 g of dipropyleneglycol monomethyl ether and 29,2 g 2-propanol were fed to a 2 l flask. On conclusion of the addition polymerisation process and after cooling to 100 °C, 10,7 g of N,N-dimethylethanolamine were added, after which, over a period of 2 hours, 552,6 g of demineralised water were also added.

Example 5

Example 1 was repeated in its entirety, except that the mixture which was homogenised in the flask was composed of:
507,6 g of intermediate A,
240,6 g of intermediate B,
185,0 g of phthalic anhydride, and
71,3 g of dimerised fatty acid, and
0,8 g of tetra-isopropyl-o-titanate.

After 3 hours the reaction mixture had an acid number of 9,9 (mg KOH/g resin). The contents of the flask were cooled to 180 °C, and 42,8 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 5 was 82,7%, the acid number was less than 1, Mw = 3826, Mn = 1904, and the Mw/Mn dispersity was 2,01.

338,6 g of polyester 5 together with 1,4 g of dipropyleneglycol monomethyl ether and 29,2 g of 2-propanol were fed to a 2 l flask. On conclusion of the addition polymerisation process and after cooling of the contents of the flask to 100 °C, 10,7 g of N,N-dimethylethanolamine were added, after which, over a period of 2 hours, 552,6 g of demineralised water were also added.

Example 6

Example 1 was repeated in its entirety, except that the mixture which was homogenised in the flask was composed of:
498,2 g of intermediate A,
225,6 g of intermediate B,
177,6 g of phthalic anhydride, and
85,5 g of dimerised fatty acid, and
0,8 g of tetra-isopropyl-o-titanate.

After 4 hours the reaction mixture had an acid number of 9,9 (mg KOH/g resin). The contents of the flask were cooled to 180 °C, and 40,2 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 6 was 82,7%, the acid number was less than 1, Mw = 4427, Mn = 2035, and the Mw/Mn dispersity was 2,18.

338,6 g of polyester 6 together with 1,4 g of dipropyleneglycol monomethyl ether and 29,2 g 2-propanol were fed to a 2 l flask. On conclusion of the addition polymerisation process and after cooling to 100 °C, 10,7 g of N,N-dimethylethanolamine were added, after which, over a period of 2 hours, 552,6 g of demineralised water were also added.

Example 7

Example 1 was repeated in its entirety, except that the mixture which was homogenised in the flask was composed of:
526,7 g of intermediate A,
240,6 g of intermediate B,
192,4 g of phthalic anhydride, and
57,0 g of dimerised fatty acid, and
0,8 g of tetra-isopropyl-o-titanate.

After 4,5 hours the reaction mixture had an acid number of 7,4 (mg KOH/g resin). The contents of the flask were cooled to 180 °C, and 32,2 g of glycidyl ester of 1,1-dimethyl-1-heptanecarboxylic acid (Cadura E-10® ex Shell) were added. The reaction mixture was kept at 180 °C for 1 hour. After cooling to 125 °C, 180,0 g of dipropyleneglycol monomethyl ether were added to the reaction mixture. The solids content of polyester 7 was 83,3%, the acid number was less than 1, Mw = 3777, Mn = 1896, and the Mw/Mn dispersity was 1,99.

336,1 g of polyester 7 together with 7,9 g of dipropyleneglycol monomethyl ether and 25,3 g of 2-propanol were fed to a 2 l flask. On conclusion of the addition polymerisation process and after cooling to 100 °C, 10,7 g of N,N-dimethylethanolamine were added, after which, over a period of 2 hours, 552,6 g of

demineralised water were also added.

Example 8

Example 1 was repeated in its entirety, except that the mixture which was homogenised in the flask was composed of:

251,6 g of intermediate C,
126,2 g of intermediate B,
101,4 g of phthalic anhydride, and
37,5 g of dimerised fatty acid, and
0,3 g of tetra-isopropyl-o-titanate.

After 5 hours the reaction mixture had an acid number of 9,0 (mg KOH/g resin). The contents of the flask were cooled to 180 ° C, and 19,6 g of glycidyl ester of 1,1-dimethyl-1-heptanecarboxylic acid (Cadura E-10® ex Shell) were added. The reaction mixture was kept at 180 ° C for 1 hour. After cooling to 125 ° C, 33,0 g of dipropyleneglycol monobutyl ether were added to the reaction mixture. The solids content of polyester 8 was 92,3 %, the acid number was less than 1, Mw = 3870, Mn = 1944, and the Mw/Mn dispersity was 1,99.

308,5 g of polyester 8 together with 18,5 g of dipropyleneglycol monobutyl ether and 18,6 g 2-propanol were fed to a 2 l flask. On conclusion of the addition polymerisation process and after cooling of the contents of the flask to 100 ° C, 10,9 g of N,N-dimethylethanolamine were added, after which, over a period of 2 hours, 683,5 g of demineralised water were also added.

Example 9

Example 1 was repeated in its entirety, with the proviso that the mixture which was homogenised in the flask was composed of:

381,0 g of 2,2-dimethyl-1,3-propane diol
136,9 g of isophthalic acid,
348,0 g of phthalic anhydride,
98,0 g of 1,1,1-tris(hydroxymethyl)propane,
208,9 g of unsaturated fatty acid (containing 65% of conjugated linoleic acid, Nouracid DE-656® ex Akzo),
87,1 g of dimerised fatty acid, and
0,6 g of tetra-isopropyl-o-titanate.

Over a period of 9 hours the temperature was raised to 245 ° C. After 12 hours the reaction mixture had an acid number of 8,0 (mg KOH/g resin). The contents of the flask were cooled to 180 ° C and kept at this temperature for 1 hour. After cooling to 125 ° C , 125,0 g of diethyleneglycol monobutyl ether were added to the reaction mixture. The solids content of polyester 9 was 88,6%, the acid number was less than 1, Mw = 2881, Mn = 1666, and the Mw/Mn dispersity was 1,73.

316,0 g of polyester 9 together with 5,6 g of diethyleneglycol monobutyl ether and 18,3 g of 2-propanol were fed to a 2 l flask. On conclusion of the addition polymerisation process and after cooling to 100 ° C, 10,7 g of N,N-dimethylethanolamine were added, after which, over a period of 2 hours, 672,3 g of demineralised water were also added.

TABLE I

| properties of the aqueous polymer dispersions | | | | |
|---|---|---|---|---|
| Dispersion of Example | Solids content (wt.%) | Viscosity (Pa.s.) | pH | mean particle size (nm) |
| 1 | 38,0 | 1,32 | 8,6 | 112 |
| 2 | 34,6 | 5,43 | 8,6 | 154 |
| 3 | 37,4 | 5,65 | 8,5 | 303 |
| 4 | 37,5 | 6,75 | 8,7 | 258 |
| 5 | 37,4 | 2,23 | 8,7 | 212 |
| 6 | 37,9 | 3,01 | 8,6 | 219 |
| 7 | 36,4 | 1,53 | 8,5 | 265 |
| 8 | 34,2 | 9,58 | 8,5 | 240 |
| 9 | 34,0 | 4,56 | 8,6 | 175 |

Preparation of coating compositions

In the following Examples 10-18 a number of unpigmented coating compositions according to the invention were prepared by mixing the dispersion, melamine hardener and, optionally, water as specified in TABLE II into a homogeneous composition.

The melamine hardener employed in these examples was a 90% solids melamine resin commercially available under the trade designation Cymel 327® from Cyanamid. The demineralised water was added to adjust the viscosity to a spraying consistency of 0,1 Pa.s. (run-out viscosity of 30 seconds in a Ford Cup No. 4). The solids content of these coating compositions was determined in the same manner as described above for the dispersions, the results being listed in TABLE III.

Each of the coating compositions was applied onto a zincphosphate pretreated steel panel (Bonder 132) and cured in a baking oven at 140 °C for 30 minutes. Various properties of the thus obtained coating compositions were measured, and the results are listed in TABLE III. The Persoz hardness was determined in accordance with French industrial standard NF T30-016, the result being espressed in seconds. An acceptable minimum for automotive paints is about 180 seconds. The flexibility of the coating compositions was determined with the ball impact test in accordance with ASTM D2794-69 using a ball weight of 0,908 kg, a ball diameter of 15,9 mm, and an aperture of 16,3 mm. The results are expressed in kg.cm. An acceptable minimum flexibility is 35 kg.cm, with the maximum measurable value being 85 kg.cm. The gloss of the coating composition was determined in accordance with U.S. industrial standard ASTM D-523 at 60° and 20°. A gloss value on a steel substrate of above 80 at 60° is considered high.

TABLE II

| coating compositions | | | | | | |
|---|---|---|---|---|---|---|
| Example | Dispers. | Dispersion (g) | Hardener (g) | water (g) | i-butanol (g) | solids content wt.% |
| 10 | ex 1 | 100,0 | 12,6 | 4,0 | 1,5 | 40,8 |
| 11 | ex 2 | 100,0 | 11,5 | 5,2 | 1,3 | 37,5 |
| 12 | ex 3 | 100,0 | 12,5 | 6,8 | 1,4 | 38,8 |
| 13 | ex 4 | 100,0 | 12,5 | 6,0 | 1,4 | 38,9 |
| 14 | ex 5 | 100,0 | 12,5 | 8,0 | 1,4 | 38,4 |
| 15 | ex 6 | 100,0 | 12,7 | 7,2 | 1,4 | 38,2 |
| 16 | ex 7 | 100,0 | 12,1 | 4,0 | 1,4 | 39,9 |
| 17 | ex 8 | 100,0 | 11,2 | 7,1 | 1,2 | 37,0 |
| 18 | ex 9 | 100,0 | 11,3 | 4,0 | 1,3 | 37,0 |

TABLE III

| properties of the coating layers applied with the coating compositions | | | | | | |
|---|---|---|---|---|---|---|
| Coating composition of example | coat thickn. (µm) | Persoz hardn. | Flexibility (kg.cm) | | Gloss | |
| | | | coat. side | uncoat. side | 60 | 20 |
| 10 | 40 | 263 | 80 | 60 | 98 | 82 |
| 11 | 36 | 259 | 85 | 76 | 97 | 77 |
| 12 | 36 | 262 | >85 | 83 | 96 | 80 |
| 13 | 36 | 237 | 85 | 74 | 94 | 77 |
| 14 | 38 | 242 | >85 | >85 | 94 | 78 |
| 15 | 37 | 234 | 83 | 65 | 95 | 77 |
| 16 | 38 | 270 | 82 | 60 | 95 | 78 |
| 17 | 40 | 177 | >85 | >85 | 95 | 71 |
| 18 | 40 | 265 | 56 | 52 | 99 | 82 |

The results of TABLE III show that the hybrid polymers according to the invention can be used to prepare coating compositions with favourable properties such as flexibility and gloss.

**Claims**

**1.** A water-dispersible hybrid polymer comprising an unsaturated fatty acid-functionalised polyester (core), at least a portion of the unsaturated fatty acids of which contains conjugated double bonds, onto which an addition polymer chain (shell) has been grafted, characterised in that the unsaturated fatty acid-functionalised polyester:
- has an acid number of less than 5 (mg KOH/g),
- is built up of polyols and a) cycloaliphatic and/or aromatic dicarboxylic acids or derivatives thereof and b) aliphatic dicarboxylic acids having 4-40 carbon atoms or derivatives thereof, with the molar ratio of a:b being in the range of 5:1 to 40:1,
- comprises an unsaturated fatty acid at least 40 mole% of which contains conjugated double bonds, and

that the addition polymer chain (shell) has an acid number in the range of 20 to 100 (mg KOH/g).

**2.** A water-dispersible hybrid polymer according to claim 1, characterised in that 40-90 wt.% of it is made up of core and 10-60 wt.% of shell, calculated on the combined weight of core and shell.

**3.** A water-dispersible hybrid polymer according to claim 1 or 2, characterised in that the core comprises 5-40 wt.% of unsaturated fatty acid.

**4.** A water-dispersible hybrid polymer according to claim 1, characterised in that the unsaturated fatty acid-functionalised polyester has a molecular weight (Mn) of 500 to 4000.

**5.** A water-dispersible hybrid polymer according to claim 1, characterised in that the polyester is built up of:

(a) n moles of an aromatic and/or a cycloaliphatic dicarboxylic acid or a derivative thereof,
(b) m moles of an aliphatic dicarboxylic acid having 4-40 carbon atoms or a derivative thereof,
(c) x moles of a diol having 2-12 carbon atoms,
(d) y moles of a triol having 3-12 carbon atoms,
(e) y moles of an unsaturated fatty acid at least 40 mole% of which contains conjugated double bonds,

wherein $n = 1$ to 10, n/m is in the range of 5/1 to 40/1, and $x + y = n + m + 1$, and

(f) 2-10 wt.% (calculated on the weight of $a + b + c + d + e$) of the glycidyl ester of a carboxylic acid according to formula 1:

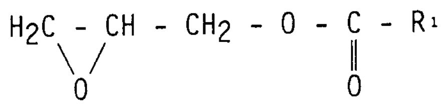

(1)

wherein $R^1$ is an alkyl group with 4-40 carbon atoms.

**6.** A water-dispersible hybrid polymer according to claim 1, characterised in that the shell is obtained from a monomer mixture comprising:

35-55 mole% of styrene and/or $\alpha$-methylstyrene,

20-50 mole% of a compound according to formula 2:

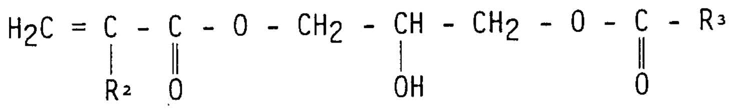

(2)

wherein:

$R^2$ represents a hydrogen atom or a methyl group and

$R^3$ represents an alkyl group having 4-40 carbon atoms, and

0-30 mole% of some other mono-unsaturated compound.

**7.** A water-dispersible hybrid polymer according to claim 1, characterised in that the shell is obtained from a monomer mixture comprising:

35-55 mole% of styrene and/or $\alpha$-methylstyrene,

20-50 mole% of acrylic acid and/or methacrylic acid, and

0-30 mole% of some other mono-unsaturated compound,

wherein, during or after polymerisation, the reaction product is reacted with a glycidyl ester of a carboxylic acid according to formula 3:

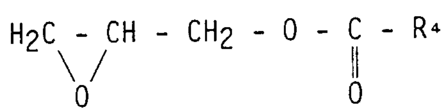

(3)

wherein $R^4$ is an alkyl group having 4-40 carbon atoms.

**8.** A water-dispersible hybrid polymer according to any one of the preceding claims, characterised in that at least a portion of the carboxyl groups of the addition polymer chain has been neutralised.

**9.** An aqueous dispersion based on the at least partially neutralised hybrid polymer according to claim 8.

**10.** An aqueous coating composition based on the aqueous dispersion according to claim 9.

**11.** The aqueous coating composition according to claim 10, characterised in that the coating composition further comprises a hydroxyl group-reactive curing agent.

**12.** A process of coating a substrate with a coating composition, characterised in that use is made of a coating composition according to claim 10 or 11.

European Patent Office

# EUROPEAN SEARCH REPORT

Application Number

EP 93 20 0216

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 083 137 (AKZO)<br>* claims 1,2 *<br>--- | 1 | C08F283/01<br>C08G63/48<br>C09D5/02<br>C09D151/08 |
| A | EP-A-0 072 979 (HENKEL)<br>--- | | |
| A | EP-A-0 305 795 (VIANOVA KUNSTHARZ)<br>----- | | |
| | | | **TECHNICAL FIELDS SEARCHED (Int. Cl.5 )** |
| | | | C08F<br>C09D |

The present search report has been drawn up for all claims

| Place of search | Date of completion of the search | Examiner |
|---|---|---|
| THE HAGUE | 20 APRIL 1993 | MEULEMANS R.A.M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document